# EUROPEAN PATENT APPLICATION

(11) **EP 2 383 229 A1**
(43) Date of publication of application: **02.11.2011**
(21) Application number: 10731081.5
(22) Date of filing: 15.01.2010
(51) Int. Cl.: C02F 1/461

(54) **ADAPTABLE ELECTRODE HOLDER FOR ELECTROLYSIS**

(30) Priority: 16.01.2009 ES 200900062 U
(71) Applicant: Duffau Benito, Jose Felix, 29780 Nerja, Málaga (ES); Frias Garrido, Victor, 29780 Nerja Málaga (ES)
(72) Inventor: Duffau Benito, Jose Felix, 29780 Nerja, Málaga (ES); Frias Garrido, Victor, 29780 Nerja Málaga (ES)
(86) International application number: PCT/ES2010/000010
(87) International publication number: WO 2010/081922

(57) **Abstract**

The present invention relates to an adjustable electrode holder for electrolysis which allows performing the electrolysis of aqueous solutions inside any vessel, tank or container, either open or closed, with the possibility of coupling any type of electrode made from different materials and having different shapes and intended for different purposes. To that end, it is made up of a housing (1) in the form of an inverted pan open in the lower portion, the top portion of said housing being provided with sealed access means for a pair of cables (5-5') of opposing polarity which branch off inside said housing so as to end in respective electrical junctions (6-6') to which at least two contacts (7-7') are connected, the latter being provided with practicable connection means for connecting the corresponding electrodes (8-8'). The sealed access means, the cables (5-5'), the electrical junctions (6-6') and part of the strips or contacts (7-7') are perfectly insulated inside the housing (1) by filling the latter with an insulating filling material (9) such as polyester or the like.

## Description

### Object of the Invention

The present invention relates to an adaptable electrode holder for electrolysis the purpose of which is to provide a highly versatile device which allows performing the electrolysis of aqueous solutions in any vessel, tank or container, either open or closed, with the possibility of coupling any type of electrode made from different materials and having different shapes and intended for different purposes.

### Field of Application of the Invention

The purpose of water treatment is to achieve water having optimal properties and characteristics which are suitable for a specific use. An unlimited number of chemical, physical and biological techniques are used for this purpose.

First, it is necessary to clarify that the concept of water that is commonly used does not correspond with the chemical definition known by all to refer to the pure compound consisting solely of oxygen and hydrogen. The popular term "water" relates to a group of substances sharing the common factor that the chemical compound known as water, (H₂O), is found in a higher proportion that other components, so the chemical, physical or biological properties of those substances are different. In a nutshell, when speaking of water colloquially, it refers to an aqueous solution of both organic and inorganic compounds either in solution or in suspension. There is a significant number of classifications and uses of water and they are not the object of this invention, so it is assumed that this equipment, grounds for the application, has a general application to water of any type and its utilization and adaptation will depend on the purpose and uses of the water in question subjected to treatment.

Electrolysis is carried out in an electrolytic cell and consists of breaking down a solution using an electric current. This current enters the solution through two identical electrodes of opposing electric polarity. The solution will be made up of ionizable compounds which split into positive and negative ions, which migrate and accumulate in the electrodes called anode and cathode, positive and negative, respectively.

In terms of the electrolysis of water, when a solution containing water (H₂O) is subjected to the passage of a polarized direct electric current, it is detected that after a certain potential, gases begin to be given off; that potential is referred to as breakdown and after that point the increase in the voltage will entail and increase of the current passing through the cell.

In fact, the breakdown voltage of the water is the same in solutions with different chemical and physical properties. The conclusion is that there is a common process in each case. The only common process in all aqueous solutions is the breakdown of water, which consists of discharging hydronium ions, H⁺, in the cathode, producing hydrogen gas, and discharging hydroxyl ions, OH⁻, in the anode, causing the release of oxygen gas.

In addition to these two elemental atomic gases, one of which, i.e., molecular oxygen, O2, has such a high oxidation potential and rate of reaction that it alone would be capable of treating the water, disinfecting and clarifying it, other compounds are also formed with structures of molecules, ions and free radicals of very complex forms and very high oxidation potentials.

The electrolysis of water causes changes in the electronic structure and energy state of the chemical compounds and elements forming part of the aqueous solution, especially in the water molecule and atoms, giving rise to a considerable increase of its ionic activity and its oxidation-reduction potentials. This considerable energy increase due to the elevation of the electrochemical potential of the water entails an increase in its capacity for performing work, especially in water treatment and purification.

In summary, electrolysis generates the active compounds producing the purification treatment of the water by means of a physicochemical oxidation-reduction process, giving rise to disinfection, clarification and other treatment and conditioning processes, such as preventing or removing biological contamination, carbonating and acidifying the water, aiding in coagulation and flocculation of the matter dissolved in the water; all in all, the process of electrolysis of water generates elements and compounds which activate the electrochemical properties of the water, which allows improving its chemical, biological and organoleptic quality.

With regards to oxidation, by definition it is the combination of an element or compound with oxygen atoms; in this reaction, the oxygen atom gains electrons at the expense of the other element or compound. By analogy, it is said that an oxidizing process takes place in an electrochemical reaction whenever there is a transfer of electrons between the atoms, regardless of whether or not oxygen atoms are involved.

Oxidation reactions modify the chemical properties of the compounds by altering their atomic and molecular structures.

These oxidation reactions in the specific case at hand which are aqueous solutions allow generating water treatment and conditioning processes with the most significant final results of disinfection and sterilization due to their biocidal and clarification effect of the water as they break down and facilitate the removal of the compounds both in solution and in solids in suspension which make the water cloudy.

### Background of the Invention

Electrolysis is a technology used in water treatment in applications such as: electrochemical activation of water, saline electrolysis, ion generation, CO₂ generation. In all cases, electrolysis, which gives rise to the breakdown of the electrolytes, the release of active compounds or products, is performed in closed chambers called electrolytic cells; these chambers, designed and built according to the specific work and desired results, are incorporated to a water treatment or purification circuit or installation; the possibility of its application depending on the limitations or characteristics of the installation as well as its use being limited to that specific use both in terms of results and design.

The applicant is unaware of a commercially distributed accessory or supplementary item which allows performing the electrolysis of an installation that does not include the necessary incorporation of the corresponding electrolysis chamber in the treatment circuit, with the likewise necessary structural modification and alteration of such chamber.

In all the cases the applicant is aware of, the electrode assembly, the area where electrolysis is formed, is an inseparable part of the electrolytic cell and the latter of the installation.

The applicant is therefore unaware of commercial accessories which allow performing electrolysis of aqueous solutions in any vessel, tank or container, either open or closed, with the possibility of coupling any type of electrode made from different materials and having different shapes and intended for different purposes.

### Description of the Invention

The adaptable electrode holder for electrolysis proposed by the invention solves in a fully satisfactory manner the problems described above, providing a completely versatile and multifunctional adaptable accessory for electrolysis which allows performing the electrolysis of water in any vessel, tank or container where it can be introduced and stabilized, performing any electrolysis work and using any type of electrodes designed for any function, such as activation, chlorination, carbonation, etc.

More specifically, the equipment is made up of a single compact body in which the elements integrating the electrode holder per se are located, in which a rectangular-shaped central body of suitable thickness is included for containing the other elements, embedded in a plastic filling and fixing mass.

The electrical titanium contacts project from the inner face of the mentioned body, to which contacts the electrodes of a suitable material, type and shape are connected such that their connection is in accordance with the type of electrodes although they are typically connected by means of a plastic screw with a lock nut and washer as will be seen below. The separation of these electrode holders will be determined depending on the type of electrodes and the purpose of the work being performed, i.e., electrochemical activation of water, electrochlorination of pools, disinfection in a closed container, in situ production of free chlorine, bleach, carbonation of pools or aquariums, etc., and also on the shape and size of the electrodes.

Projecting on the opposite flat face there is a threaded tube which has a dual purpose; on one hand, it allows the entrance of the cable conducting the electric current supplying the electrodes, and on the other hand it serves as a means of holding or attaching the electrode holder to the closed vessel or to the support in any open or closed container.

In the case of closed systems, the threaded tube systems passes through the cover, sand filters, pump pre-filter, etc., being held by means of an outer lock nut and forming a seal by means of a rubber gasket placed in the inner part of the system.

In the open systems, tanks, aquariums, buckets, troughs, etc., the threaded tube is connected to an accessory, usually made of PVC, which will serve as a support and attachment for the system or installation, in addition to leading the power supply cable.

Inside the solid part or body of the electrode holder there is located the section of titanium contacts which are joined to the electrical conductors of the power supply, this junction is solid, close and permanent, assuring a perfect electrical connection between the titanium electrode holders and the electrodes performing electrolysis, both the titanium contacts and the cables are duly embedded and protected inside the plastic material. In turn, the threaded tube is firmly held in the body and consolidated in the fixing and filling material, preventing any failure in the hold.

Based on this structure, the equipment of the invention could be applied in any field of electrolysis, and especially in the field of water treatment by means of electrolysis, such as:
- Electrochemical activation of water in installations of pools, whirlpools, tower cooling circuits, aquariums, fish hatcheries, decorative pubic fountains, water basins, irrigation waters, etc.
- Disinfection of water for drinking and domestic uses.
- Disinfection of instruments in a trough.
- Disinfection and treatment of water from washing and disinfection circuits.
- In situ production of free chlorine, bleach for local hygiene.
- Generation of CO₂ with graphite electrodes. Carbonation of water. pH adjustment.
- Production of metal ions for water treatment.

However, these are only a few of the many applications in which the device can be used.

There can be different ways of installing the electrode holder within each of the possible applications. There are two clearly distinct manners of use, i.e., in closed systems and in open systems.

In closed systems there are the cases, for example, of the circuits of a pool, whirlpool, etc., in this case the electrode holder could be installed in the recirculation pump pre-filter or in the material filter or cartridge, and ultimately in any skimmer.

In the case of a tower recirculation cooling circuit, the electrode holder can be installed both in the recirculation pump pre-filter and also in the cleaning filter, if it has one, or it could be installed in the tower basin, i.e., in the open area.

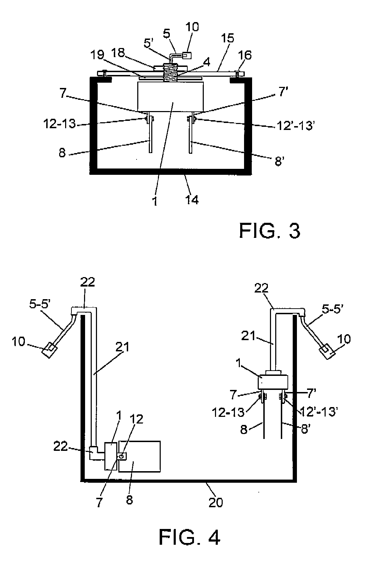

In open systems, tanks, basins, buckets, etc., the installation is simple and easy because it is supported virtually by the tank itself without any type of additional assembly. The simplicity of the assembly can be seen in Figure 4. In the case of large tanks, the equipment can use the floating method to distribute its active substances throughout the entire system.

It can be asserted that there are a great number of combined fields of application and possible installations of the electrode holders proposed by the invention, so it can be considered very versatile and multifunctional equipment adaptable to any demand and need.

### Description of the Drawings

To complement the description that is being made and for the purpose of aiding to better understand the features of the invention in accordance with a preferred practical embodiment thereof, a set of drawings is attached as an integral part of said description in which the following has been depicted with an illustrative and non-limiting character:
Figure 1 shows an elevational section view of an adaptable electrode holder for electrolysis made in accordance with the object of the present invention.
Figure 2 shows an outer view of the assembly of the preceding figure.
Figure 3 shows, in a view similar to that of Figure 1, the device of the preceding figures assembled in a closed system.
Figure 4 finally shows, according to a view similar to that of Figure 2, the device of Figures 1 and 2 assembled in an open system, in two assembly positions, horizontal and vertical.

### Preferred Embodiment of the Invention

In view of the mentioned figures, it can be observed how the proposed device is made up of a main body or housing (1) in the form of an inverted pan open in the lower portion, the geometry of which may vary depending on different design parameters, being able to be in the shape of a rectangular cube, hexagonal cube, or any geometric body which adapts to the specific needs of each case, a housing (1) which in any case will have a closed upper base (2), with the exception of a hole (3) in which a threaded tube (4) is inserted, the shape and size of which threaded tube are suitable for allowing the passage therethrough of a pair of cables (5-5'), or where appropriate, a two-wire cable of opposing polarity, with an outer thread (4) acting as fixing means for fixing the device, as will be seen below.

The threaded tube (4) partially accesses the inside of the housing (1), where the wires (5) and (5') branch off so as to end in respective electrical junctions (6-6') to which there are connected respective contacts (7-7') consisting of respective titanium strips on which the corresponding electrodes (8-8') are detachably connected.

The threaded tube (4), wires (5-5'), electrical junctions (6-6'), and part of the strips or contacts (7-7') are perfectly insulated inside the housing (1) by filling the latter with a filling material (9), generally polyester, which never allows a failure in the hold or sealing problems.

The two-wire cable or cables (5-5') end externally in an electrical connector (10) which allows the junction with the corresponding power supply, not depicted in the drawings.

The threaded tube (4) will also incorporate an inner filling (11) of insulating and fixing material, such as silicone or the like, for the purpose of protecting the cable.

There can be 2, 3 or more contacts (7-7'), depending on the purpose of the electrolysis, such that the electrical junctions (6-6') will be made such that contiguous electrodes (8-8') always have opposing polarity.

The junction between the electrical cables (5-5') and the titanium contacts (7-7') will be completely efficient, assuring a fail-proof electrical connection.

The location, separation and orientation of the contacts (7-7') will also be perfect and in accordance with the electrolysis work to be performed, being done with greater precision to assure that the electrodes (8-8') are correctly separated and with their planes being parallel.

As discussed above, the electrodes (8-8') will be detachably fixed to the contacts (7-7'), for which purpose the strips in which said contacts are made will have a hole, the shape and size of which matches another hole made on the corresponding electrode, such that said junction will be formed by means of a screw-nut assembly (12-13) preferably made of plastic.

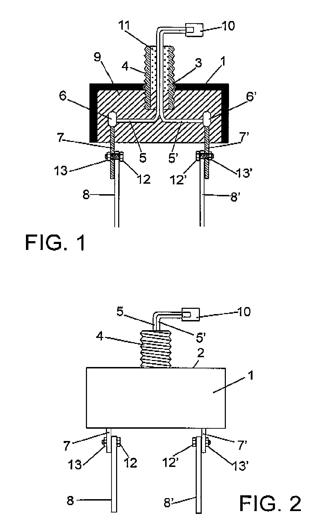

Therefore, part of the titanium strips forming the contacts (7-7') on which the corresponding electrodes (8-8') could be fixed emerge from the lower face of the housing (1), as can be seen in Figure 2.

As repeatedly described, the device of the invention is very versatile, such that it can be installed indistinctly in closed systems like the one in Figure 3, or in open systems like the one in Figure 4.

In the former, corresponding to Figure 3, it can be observed how the device can be implemented in a closed container (14) provided with an upper cover (15) which is fixed by means of screws (16), such that by means of making a hole (17) in the cover (15), the shape and size of which are suitable for the outer diameter of the threaded tube (4), the body or housing (1) of the electrode holder could be arranged inside said assembly, being suspended from said cover with the collaboration of the corresponding nut (18) and of a gasket (19) placed between the cover (15) and the housing (1).

In turn, in open systems (20) like the one in Figure 4, the device of the invention could be arranged in different positions, such as in a vertical position, for example, as it is depicted in the right side of said figure, or in a horizontal position, as it is depicted in the left side, such that the mentioned threaded tube (4) will be associated with a conduit (21) through which the cables (5-5') and the connector (10) pass in a sealed manner, said conduit (21) have the elbows (22) or accessories necessary for leading said cables out of the system.

## Claims

1. An adaptable electrode holder for electrolysis, being especially designed for electrolysis of aqueous solutions in any vessel, tank or container, either open or closed, with the possibility of coupling any type of electrode made from different materials and having different shapes and intended for different purposes, **characterized in that** it is made up of a housing (1), in the form of an inverted pan, open in the lower portion, the top portion of said housing being provided with sealed access means for a pair of cables (5-5'), or two-wire cable, of opposing polarity through which the device is connected to a power supply, which cables branch off inside said housing so as to end in respective electrical junctions (6-6') to which there are connected at least two contacts (7-7') consisting of respective strips, preferably made of titanium, provided with practicable connection means for connecting the corresponding electrodes (8-8'), having been provided that the sealed access means, the cables (5-5'), the electrical junctions (6-6'), and part of the strips or contacts (7-7'), with the exception of their ends for the connection to the electrodes (8-8') are perfectly insulated inside the housing (1) by filling the latter with an insulating filling material (9), such as polyester or the like.

2. The adaptable electrode holder for electrolysis according to claim 1, **characterized in that** the sealed access means for the pair of cables (5-5') consist of a threaded tube (4) the shape and size of which are suitable for a hole (3) arranged on the base of the housing (1), having been provided that said threaded tube incorporates an inner filling (11) of insulating and fixing material, such as silicone or the like, for the purpose of protecting the cable.

3. The adaptable electrode holder for electrolysis according to claim 1, **characterized in that** the pair of cables or two-wire cable (5-5') ends at its free end in an electrical connector (10).

4. The adaptable electrode holder for electrolysis according to claim 1, **characterized in that** depending on the purpose of the electrolysis, there can be 2, 3 or more contacts (7-7'), such that the electrical junctions (6-6') will be made such that contiguous electrodes (8-8') always have opposing polarity.

5. The adaptable electrode holder for electrolysis according to claim 1, **characterized in that** the fixing means for fixing the contacts (7-7') to the electrodes (8-8') consist of screw-nut assemblies (12-13), (12'-13') preferably made of plastic, the screws (12) passing through holes suitable in shape and size made both on the contacts (7-7') and on the electrodes (8-8').

6. The adaptable electrode holder for electrolysis according to the preceding claims, **characterized in that** when the adaptable electrode holder is intended for being implemented in a closed system, a nut (18) and a gasket (19) for the stabilization of the former on the cover (15) or upper surface in question through the corresponding through hole collaborate with the threaded tube (4).

7. The adaptable electrode holder for electrolysis according to claims 1 to 5, **characterized in that** when the adaptable electrode holder is intended for being implemented in an open system, the threaded tube (4) will be associated in a sealed manner with a conduit (21) through which the cables (5-5') and the connector (10) pass, said conduit (21) having the elbows (22) or accessories necessary for leading said cables out of the system.
